# EUROPEAN PATENT APPLICATION

(11) **EP 4 736 727 A1**
(43) Date of publication of application: **06.05.2026**
(21) Application number: 25186149.8
(22) Date of filing: 30.06.2025
(51) Int. Cl.: A47L 15/00, A47L 15/42

(54) **A DISHWASHER COMPRISING A HEAT PUMP**

(30) Priority: 31.10.2024 TR 2024014813
(71) Applicant: Arçelik Anonim Sirketi, 34445 Istanbul (TR)
(72) Inventor: SEREN, ERDOGAN MERT, 34445 ISTANBUL (TR); POYRAZ, ONUR, 34445 ISTANBUL (TR); OZTIN, TURAN EGE, 34445 ISTANBUL (TR); YUCE, HAMIT TAYLAN, 34445 ISTANBUL (TR); BALIKCI, ILHAN, 34445 ISTANBUL (TR)

(57) **Abstract**

The present invention relates to a dishwasher (1) comprising a body (2); a washing tub (3) which is disposed in the body (2) and wherein the washing process is performed; at least one spraying member (4) which sprays water onto the kitchen items placed into the washing tub (3); a heat pump (8) which is arranged under the washing tub (3) and which has a first heat exchanger (5) enabling the water to be used in the washing step to be heated by drawing heat from the environment, a second heat exchanger (6) transferring the heat received from the first heat exchanger (5) to the washing water and a compressor (7) in fluid communication with the first heat exchanger (5) and the second heat exchanger (6) so as to realize the refrigerant cycle; a temperature sensor (9) which is disposed in the washing tub (3); the main washing cycle having a heating step for heating the washing water and a circulation step for circulating the water in the washing tub (3); and a control unit (10) which changes the time (Tisi) spent for the heating step and the time (Tsir) spent for the circulation step relative to each other based on the increase in temperature in the washing tub (3) such that the time (Tana) spent for the main washing cycle remains constant. By means of the temperature sensor (9) disposed in the washing tub (3), the changing temperature during the heating of the washing water is measured.

## Description

The present invention relates to a dishwasher comprising a heat pump.

In the dishwashers, heat pumps are used for decreasing the energy consumption and improve the drying performance. In heat pump dishwashers, the heat pump is composed of the compressor, the condenser, the throttle valve and the evaporator. The components of the heat pump are connected via a tube line and the heat pump operates by means of the cycle fluid in the line. The condenser is a tube bundle having a hot surface and enables the water to be heated by being positioned in the washing water of the dishwasher. The evaporator has a cold surface and is positioned so as to contact the ambient air. The evaporator absorbs heat from the environment and provides the heat transfer to the compressor and the condenser. In this type of heat pump systems, for heating the water, the compressor is operated such that the condenser is enabled to heat the water, and the evaporator is enabled to absorb heat from the environment to support the condenser which heats the water. The compressor pressurizes and sends the cycle fluid to the condenser. The cycle fluid passes through the condenser and reaches the evaporator. After the evaporator, the cycle fluid returns to the compressor. By sending the fluid received by the compressor to the condenser again, the cycle is completed. Thus, the heating of the washing water is performed much more efficiently compared to the conventional dishwashers having a heater. However, since the evaporator is in direct heat exchange with the environment, variable ambient temperatures cause changes in the operating conditions of the heat pump system, thus affecting the energy consumed and time required to heat the water. As a result, the heat pump system is highly sensitive to variable ambient temperatures. Moreover, variations in the water heating time may affect the washing performance depending on the algorithm.

In the state of the art European Patent Document No. EP3148392B1, a dishwasher is disclosed, comprising a heat pump. The said dishwasher ensures that the fans are controlled depending on the ambient temperature while the washing water is heated.

The aim of the present invention is the realization of a dishwasher comprising a heat pump providing an efficient washing independently of the ambient conditions.

The dishwasher realized in order to attain the aim of the present invention, explicated in the first claim and the respective claims thereof, comprises a body; a washing tub which is disposed in the body; at least one spraying member which sprays water into the washing tub; a temperature sensor which is disposed in the washing tub; a main washing cycle having a heating step for heating the washing water and a circulation step for circulating the water in the washing tub; and a heat pump which is disposed in the body. The heat pump has a first heat exchanger which absorbs heat from the environment so as to enable the water used in the washing step to be heated; a second heat exchanger which transfers the heat received from the first heat exchanger to the washing water; and a compressor which is in fluid communication with the first heat exchanger and the second heat exchanger and which performs the refrigerant cycle. Thus, by utilizing the ambient temperature, the washing water can be heated more quickly.

The dishwasher of the present invention comprises a control unit which controls the time spent for the heating step and the time spent for the circulation step based on the increase in temperature in the washing tub such that the main washing cycle is performed in a fixed time. The time spent for the heating step and the time spent for the circulation step vary in relation to each other depending on the rate of increase in temperature in the washing tub. Thus, efficient energy consumption is ensured.

In an embodiment of the present invention, the dishwasher comprises the control unit which ensures the time spent for the circulation step exceeds the time spent for the heating step when the rate of temperature increase in the washing tub is higher than a predetermined value. When the temperature in the washing tub increases rapidly, it is understood that the washing water is heated quickly due to the high ambient temperature drawn from outside, and more energy is not consumed for the heating step. When the washing water reaches the desired temperature, the circulation step is initiated, thus enabling the water to be circulated more in the washing tub. Moreover, the washing performance is improved.

In an embodiment of the present invention, the dishwasher comprises the control unit which ensures the time spent for the heating step exceeds the time spent for the circulation step when the rate of temperature increase in the washing tub is lower than a predetermined value. Due to the low temperature of the air drawn from the environment for heating the washing water, the heating step may take longer. When the time spent for the heating step is long, the time allocated for the circulation step is shortened. Thus, the washing process can be performed in the same duration even in cold environments, without extending the cycle time.

In an embodiment of the present invention, the dishwasher comprises the control unit which ensures that the duration of the main washing cycle remains constant by varying the times spent for the heating step and the circulation step in relation to each other such that the total program time remains the same and provides the same efficiency each time. Thus, the heat pump dishwashers offer users a consistent washing standard.

By means of the present invention, a dishwasher is realized, comprising a heat pump which enables the washing process to be performed in the same duration and with the same efficiency regardless of the ambient conditions.

A dishwasher realized in order to attain the aim of the present invention is illustrated in the attached figures, where:

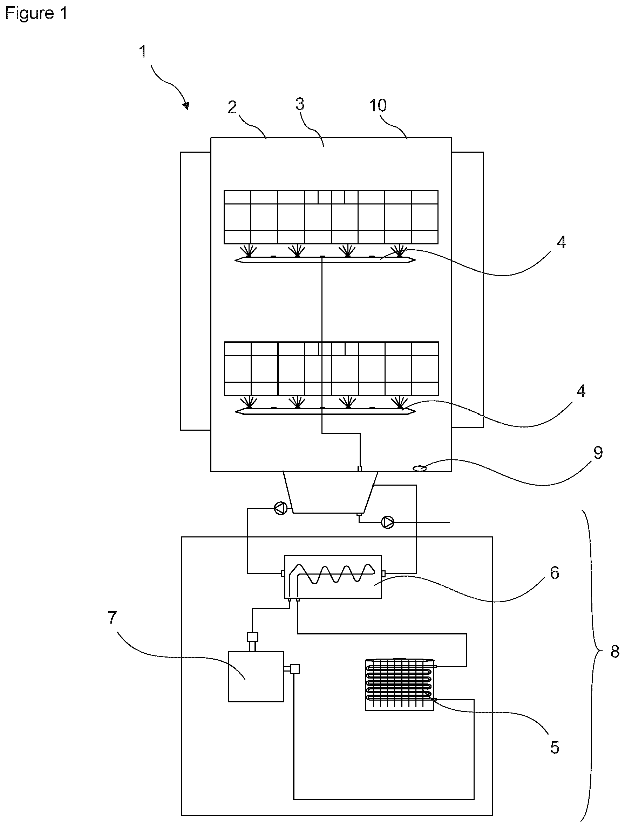

Figure 1 - is the schematic view of the dishwasher.

The elements illustrated in the figures are numbered as follows.
1- Dishwasher
2- Body
3- Washing tub
4- Spraying member
5- First heat exchanger
6- Second heat exchanger
7- Compressor
8- Heat pump
9- Temperature sensor
10- Control unit

The dishwasher (1) comprises a body (2); a washing tub (3) which is disposed in the body (2) and wherein the washing process is performed; at least one spraying member (4) which sprays water onto the kitchen items placed into the washing tub (3); a heat pump (8) which is arranged under the washing tub (3) and which has a first heat exchanger (5) enabling the water to be used in the washing step to be heated by drawing heat from the environment, a second heat exchanger (6) transferring the heat received from the first heat exchanger (5) to the washing water and a compressor (7) in fluid communication with the first heat exchanger (5) and the second heat exchanger (6) so as to realize the refrigerant cycle; a temperature sensor (9) which is disposed in the washing tub (3); and the main washing cycle having a heating step for heating the washing water and a circulation step for circulating the water in the washing tub (3). The ambient air is drawn in by means of the first heat exchanger (5) and is used for heating the washing water. Thus, the heating process is performed with high energy efficiency in the heat pump dishwasher (1).

The dishwasher (1) of the present invention comprises a control unit (10) which changes the time (T 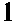 s 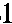 ) spent for the heating step and the time (Tsir) spent for the circulation step relative to each other based on the increase in temperature in the washing tub (3) such that the time (Tana) spent for the main washing cycle remains constant. By means of the temperature sensor (9) disposed in the washing tub (3), the changing temperature during the heating of the washing water is measured. The control unit (10) ensures that the time (Tana) spent for the main washing cycle remains constant since the time (T 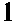 s 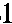 ) spent for the heating step and the time (Tsir) spent for the circulation step change relative to each other based on the temperature change. Thus, the main washing cycle is performed in the same time and with the same efficiency in each washing process, regardless of the ambient temperature.

In an embodiment of the present invention, the dishwasher (1) comprises the control unit (10) which ensures the time (Tsir) spent for the circulation step exceeds the time (T 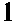 s 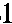 ) spent for the heating step when the rate of temperature increase in the washing tub (3) is higher than a predetermined value. The optimal heating rate for the washing water is predetermined on the control unit (10) by the manufacturer. When the washing water heats up faster due to the ambient air drawn from outside and reaches the desired temperature, the heating step is completed and the circulation step is initiated. Thus, the time (Tsir) spent for the circulation step exceeds the time (T 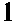 s 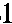 ) spent for the heating step, and the time (Tana) spent for the main washing cycle does not change. The washing water is circulated in the washing tub (3) for a longer time, enabling stubborn stains to be removed. By utilizing the ambient temperature, the washing performance is improved without increasing the energy consumption.

In an embodiment of the present invention, the dishwasher (1) comprises the control unit (10) which ensures that the time (T 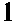 s 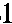 ) spent for the heating step exceeds the time (Tsir) spent for the circulation step when the rate of temperature increase in the washing tub (3) is lower than a predetermined value. When the washing water heats up more slowly due to the low temperature of the ambient air drawn from outside, more time is required for the heating step. Since the circulation is also performed simultaneously during the time (T 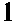 s 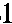 ) spent for heating the washing water, the time (Tsir) allocated for the circulation step can be shortened. Thus, the time (Tana) of the main washing step is kept constant. Thus, the washing programs are prevented from becoming excessively long in cold environments, and energy consumption remains constant.

In an embodiment of the present invention, the dishwasher (1) comprises the control unit (10) which ensures that the total washing cycle time (Ttop) remains the same each time by keeping the time (Tana) spent for the main washing cycle constant. As the heating and circulation steps change relative to each other, the main washing cycle can be performed in a constant time such that the washing program is performed in a fixed washing time. Thus, the heat pump dishwasher (1) is enabled to provide a consistent washing standard regardless of the ambient conditions.

By means of the present invention, optimum washing efficiency and energy consumption are achieved and a constant washing time (Ttop) can be provided thanks to the relative variation of the times (T 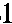 s 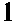 and Tsir) of the heating step and the circulation step.

## Claims

1. A dishwasher (1) **comprising** a body (2); a washing tub (3) which is disposed in the body (2) and wherein the washing process is performed; at least one spraying member (4) which sprays water onto the kitchen items placed into the washing tub (3); a heat pump (8) which is arranged under the washing tub (3) and which has a first heat exchanger (5) enabling the water to be used in the washing step to be heated by drawing heat from the environment, a second heat exchanger (6) transferring the heat received from the first heat exchanger (5) to the washing water and a compressor (7) in fluid communication with the first heat exchanger (5) and the second heat exchanger (6) so as to realize the refrigerant cycle; a temperature sensor (9) which is disposed in the washing tub (3); and the main washing cycle having a heating step for heating the washing water and a circulation step for circulating the water in the washing tub (3), **characterized by** a control unit (10) which changes the time (T 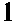 s 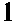 ) spent for the heating step and the time (Tsir) spent for the circulation step relative to each other based on the increase in temperature in the washing tub (3) such that the time (Tana) spent for the main washing cycle remains constant. By means of the temperature sensor (9) disposed in the washing tub (3), the changing temperature during the heating of the washing water is measured.

2. A dishwasher (1) as in Claim 1, **characterized by** the control unit (10) which ensures the time (Tsir) spent for the circulation step exceeds the time (T 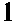 s 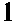 ) spent for the heating step when the rate of temperature increase in the washing tub (3) is higher than a predetermined value.

3. A dishwasher (1) as in Claim 1, **characterized by** the control unit (10) which ensures the time (T 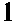 s 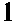 ) spent for the heating step exceeds the time (Tsir) spent for the heating step when the rate of temperature increase in the washing tub (3) is lower than a predetermined value.
